# EUROPEAN PATENT SPECIFICATION

(11) **EP 1 074 119 B1**
(45) Date of publication and mention of the grant of the patent: **15.09.2004**
(21) Application number: 99921300.2
(22) Date of filing: 10.05.1999
(51) Int. Cl.: H04L 12/407, H04L 12/02

(54) **METHOD AND ARRANGEMENT RELATED TO SYNCHRONOUS SWITCHING**
VERFAHREN UND ANORDNUNG FÜR SYNCHRONE VERMITTLUNG
PROCEDE ET DISPOSITIF RELATIFS A LA COMMUTATION SYNCHRONISEE

(30) Priority: 13.05.1998 NO 982183
(43) Date of publication of application: 07.02.2001
(73) Proprietor: Telefonaktiebolaget LM Ericsson (publ), 164 83 Stockholm (SE)
(72) Inventor: SCHUMANN-OLSEN, Reidar, N-3400 Lier (NO); SORENSEN, Bjorn, Erik, N-0575 Oslo (NO)
(74) Representative: Herbjörnsen, Rut
(86) International application number: PCT/NO1999/000151
(87) International publication number: WO 1999/059276

(56) References cited:
- EP-A1- 0 683 580
- US-A- 4 791 629
- US-A- 5 151 896
- US-A- 5 421 002

## Description

### Field of the invention

The present invention relates to a method related to synchronous switching, for example in relation to digital communication between devices being arranged on boards which are plugged into racks having a backplane associated therewith.

The present invention also relates to an arrangement for bringing such a method into practice.

### Background of the invention

Today there are limitations in the flexibility of synchronous digital switches with respect to minimum delay and configuration flexibility combined with a non-blocking concept, multi-slot switching, high capacity and high reliability.

Commercial available components use a switching matrix scheme with a centralised architecture.

Consequently, such switching matrixes suffer from not being able to achieve high capacity with redundant protection in itself, all of which being tied to the centralised concept.

Further, redundancy as mechanisms for protective supervision is complex and causes low MTBF, a fact which has hampered any development suggesting any improvement of the above prior art deficiencies.

### Prior art

US 4 547 880 (De Vita et al.) discloses a communication control apparatus for digital devices, comprising a communication bus for routing data and control signals internally between said digital devices.

US 4 955 020 (Stone et al.) relates to a digital communication system comprising a plurality of modules and a backplane having a bus architecture which is connected between said modules. This prior art bus architecture suggests to a certain degree a solution to the parameter limitation problem, but is silent about introducing a decentralised architecture related to synchronous digital switching.

US 5 432 791 (Gancarcik) relates to a digital switching system comprising a system bus transmitting data between interface boards and a control unit, said control unit using a clock system which is synchronised.

US 5 161 152 (Czerwiec et al.) discloses a high-speed synchronous transmission line access terminal, comprising an access module which in turn comprises a plurality of line boards. According to the prior art there is used a multi-link serial bus for connecting a time slot interchanger to the access module, i.e. for connecting the line boards with the processor unit.

European Patent application EP 0 683 580 A1 relates to a method for connecting an HDSL transmission link to an SDH network. Data from the SDH network to the HDSL link is mapped into the frame structure according to the HDSL system, and pointers required by the SDH network are generated in the frames passing from the HDSL link to the SDH network, the pointers indicating the phase of the payload within the frame structure.

US-patent 5,421,002 relates to a method for transmission of data in a distributed processing system, and in particular for switching between redundant buses when an error is detected. The system comprises a member. of processor boards tied together by redundant unidirectional serial circulating buses. If one of the processors detects an error, a test procedure is invoked, using test messages for evolution of a switchover from the currently active bus to the other bus.

US-patent 4,791,629 relates to communication switching system comprising a plurality of controllers coupled to a time division multiplex (TDM) bidirectional bus. Each controller includes a microprocessor to perform control functions. An interface element on the controller acesses the TDM bus while a switching element on each controller controls access between the interface element and the microprosessor. The TDM bus is divided into a plurality of time slots. Each controller is assigned certain of the time slots and utilises those time slots to communicate with other controllers.

Another document, which is relating to prior art, is US 5151896.

### Objects of the invention

Another object of the present invention is to suggest a method and arrangement in connection with synchronous digital switching wherein flexibility is greatly improved and wherein operations may be affected with a further minimum delay.

Still further, the method and arrangement according to the present invention have for an objective to leave the centralised architecture solution, and rather suggest a decentralised concept for achieving high capacity and improved redundant protection.

### Brief disclosure of the invention

The above objects are achieved in a method and an arrangement according to the present invention, which is characterized by using a decentralised concept, and more specifically by using a special bus, i.e. an RSO-bus arranged in the backplane of the associated rack.

Further features and advantages of the present invention will appear from the following description taken in conjunction with the enclosed drawings, as well as from the enclosed patent claims.

### Brief disclosure of the drawings

Fig. 1 is a schematic diagram illustrating an example of an embodiment according to the present invention.

Fig. 2 is a time system illustrating the clock system used according to the present invention.

Fig. 3 is a time diagram illustrating an addressing method used in accordance with the present invention.

### Detailed description of embodiments

As stated previously, the present invention suggests a system which in view of a prior art switching matrix scheme with a centralised architecture, suggests a decentralised concept and a decentralised architecture related thereto.

In other words, the present invention suggests the introduction of a special bus, a so-called RSO-bus arranged in the backplane of the rack wherein a plurality of devices communicating digitally with each other, are located.

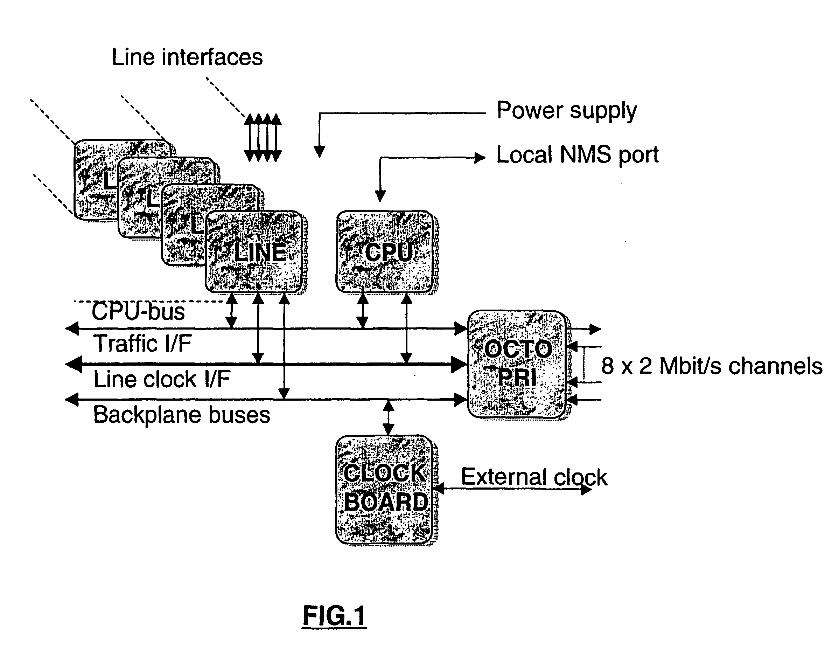

A detailed example of how such an RSO-bus can be implemented, appears from Fig. 1.

With a good designed timing and by controlling the physiological parameters, it is possible to build a synchronous digital switch without having active switching matrix components.

We describe a new bus structure, named the RSO-bus, which overcome all the constraints mentioned earlier.

This bus is used on a backplane which sits in a rack. In this rack there are several boards connected together through the backplane with the RSO-bus.

This backplane bus use an 8 bit parallel interface for traffic data (timeslots) connections. Each daughter/line board carries an internal address mechanism which is synchronised through the backplane. Both write clock read clock is generated locally on each line board, synchronised to a common 125 µs framing.

With this scheme it is possible to switch for example 2048 duplex timeslots within 125 us. Here is more thorough look equivalent to 128 2 Mbit/s interfaces.

### Internal interfaces

The system where the backplane structure is used, is composed of four types of functional units: line boards, a CPU board, a clock board and 2 Mbit/s transmission boards with an arbitrarily number of channels, but typically 8 channels in a practical switch.

### The Traffic Interface

The traffic interface is an 8 bit parallel data bus and a 125 µs framing pulse. The Backplane interface has to be seen in conjunction with the line boards which hold the interface circuit to the backplane and the addressing mechanism for giving each line board access to the backplane and then to a certain set of timeslots. The traffic is being sent between the different line boards in a thorough and well defined way.

The bus drivers used in this implementation is a GTL type, but others could be used as long as they can handle the speed requirements.

The clock system and the internal addressing system are what gives the thorough timing for how and when each line board sends and receives traffic data. The definition follows.

### Clock system

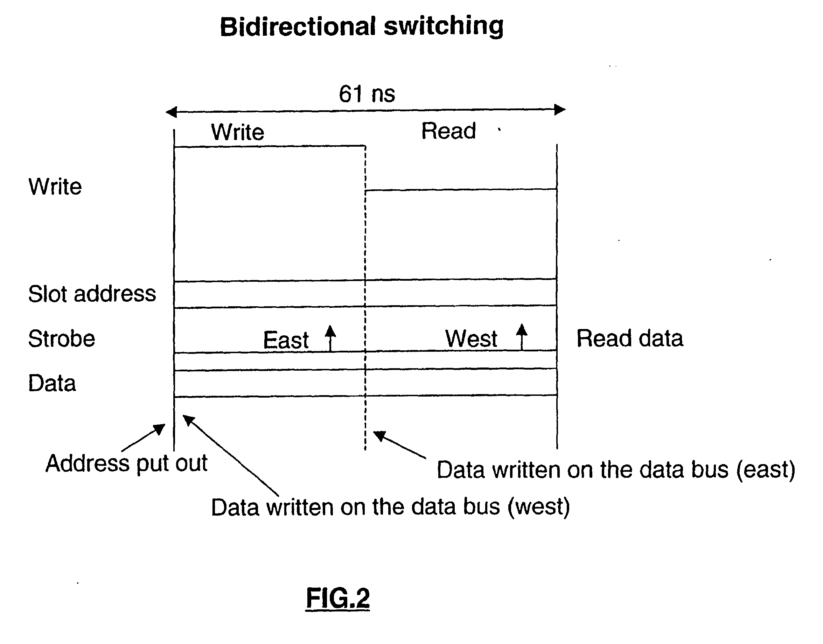

This system uses 2 clocks. Both clocks are generated locally on the LT-board. The read clock is adjusted for optimised reading of the data from the bus and into the line boards. This is illustrated in Fig. 2.

### Redundancy

A bus system is a common resource and is a single point of failure. By using a duplicated bus, there can be established redundancy against bus errors. One bus is active and one stand-by. Writing is done to both buses. By reading back and comparing reading with writing to the buss, a bus error can be detected and the standby bus can be activated.

### Addressing method

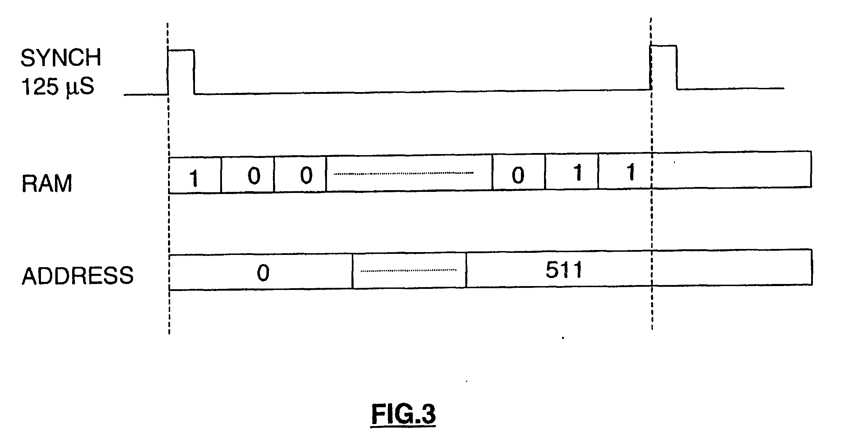

The address method comprises letting the line boards itself have its own address counter. The counter is reset/synchronised from the clock board. With the counter you can have a small RAM of 4096 bits. Each 2 bit position corresponds to a timeslot position and whether the board shall have read or write on the buss. The internal address counter gives addresses to this RAM and when a 1 is read from any of the timeslot positions, the line board will read or write in that timeslot according to how the second bit is set. The bits have the following meanings: When the bits are 1 then a read or write occur. If the bits are 0 no action will occur, see Fig. 3.

### Traffic types handled in RSO bus structure

This bus can in a non-blocking, synchronous way handle the following traffic types.

### Bidirectional

When 2 boards are to switch timeslots of 64 Kbit/s (1 each) they have to share the same bus in one 61 ns period. The traffic interface will belong to one board in the first 30.5 ns transmitting and to the second board transmitting in the next every 30.5 ns. This means that the buss has to change transmit direction every 30.5 ns.

Two boards can exchange 1 to 2048 switching cases.

### Undirectional

Read and write in different directions. In the 61 ns period there can be different read/write addresses.

### Broadcasting

One or more timeslots are transmitted (write) and can be received (read) by an arbitrary number of boards.

If multidrop is used only one of the reading addresses will be writing back.

### Advantages

The advantages of this solution is a cost-effective solution with a potential of very high reliability due to the distributed concept. The distributed concept also offers the highest degree of flexibility in switching. Redundancy can be implemented with a minimum of complexity.

The decentralised architecture of the system also makes it possible to address an arbitrary number of timeslots up to maximum capacity, and by this make it possible to connect a 155 Mbit/s SDH type of transmission to the switching backplane. This is beneficial since this makes it possible to switch the overhead capacity (TU-12/VC-12) following the 2 Mbit/s circuits in SDH.

Switching of this overhead makes it possible through transmission systems (HDSL) to terminate the overhead at a remote customer interface and by this having end to end supervision of a 2 Mbit/s circuit through a network.

Higher switching capacity can be achieved as electronic components and mechanical building practice are developed. The 2048 timeslots in the present solution can easily be extended.

### Abbreviations

MTBF - Mean Time Between Failure RSO - Inventor's initials CPU - Central Processing Unit GTL - Gate Transistor Logic OCTO - Eight Channel Link Board PRI - PCM-Primary Rate SDH - Synchronous Digital Hierarchy LT-board - Line Terminating Board

## Claims

1. Method for digital communication between devices in an arrangement comprising a plurality of line boards; said devices being arranged on said line boards; and a rack housing said plurality of line boards; wherein said rack has a backplane associated therewith; and wherein a bus is arranged in the backplane of said rack; said plurality of line boards being connected to each other through said backplane via said bus; and wherein each line board includes an address mechanism, and each line board has its own address counter; and wherein said method comprises
providing digital communication between said devices via said line boards and via said bus in the backplane of said rack; said method further comprising the use of a decentralised concept,
**the method being characterized in that**
said digital communication between said devices is performed bi-directionally using a scalable and synchronous bus;
generating a master clock signal on a clock board;
generating, locally on each line board, read and write clock signals in response to said master clock signal; and
determining how and when each line board sends and receives traffic data using the read and write clock signals and the internal addressing system so as to achieve synchronised switching of said digital communication between said devices.

2. Method as claimed in claim 1,
**characterized by** mounting interface circuits for said backplane on the respective line boards of said rack.

3. Method as claimed in claims 1 or 2,
**characterized in that** the decentralised concept is implemented by introducing an interface comprising an 8 bit parallel data bus and a 125 µs framing pulse.

4. Method as claimed in any of the preceding claims,
**characterized by** using four types of functional units: line boards, a CPU board, a clock board and 2 Mbit/s transmission boards with an arbitrary number of channels, typically 8 channels in a practical switch.

5. Method as claimed in any of the preceding claims,
**characterized by** using a duplicated bus, one bus being an active bus and the other being a stand-by bus, in which writing and reading is done to both buses.

6. Arrangement for digital communication between devices; said arrangement being based on a decentralised concept; the arrangement comprising
a plurality of line boards; said devices being arranged on said line boards;
a rack housing said plurality of line boards; wherein said rack has a backplane associated therewith; and
a bus arranged in the backplane of said rack;
said plurality of line boards being connected to each other through said backplane via said bus; **characterized in that**
said bus is a scalable and synchronous bus; said bus being a bi-directional bus; and **in that**
each line board includes an address mechanism, and each line board having its own address counter; and **in that**
a clock board which is arranged to generate a master clock signal, and **in that**
each line board is implemented to generate locally read and write clock signals in response to said master clock signal so as to achieve synchronised switching of digital communication between said devices.

7. Arrangement as claimed in claims 6,
**characterized in that** said backplane comprises interface circuits on the respective line boards of said rack.

8. Arrangement as claimed in claims 6 or 7,
**characterized in that** an interface comprises an 8 bit parallel data bus and a 1 bit address bus.

9. Arrangement as claimed in any of the claims 6-8,
**characterized in that** the backplane structure is composed of four types of functional units: line boards, a CPU board, a clock board and 2 Mbit/s transmission boards with an arbitrary number of channels, typically 8 channels in a practical switch.

10. Arrangement as claimed in any of the claims 6-9,
**characterized in that** the arrangement comprises a duplicated bus, one bus being active and the. other being stand-by, both buses being adapted for being written to.

## Patentansprüche

1. Verfahren für eine digitale Kommunikation zwischen Vorrichtungen in einer Anordnung mit einer Vielzahl von Leitungsbauteilen; wobei die Vorrichtungen auf den Leitungsbauteilen angeordnet sind; und einem Gestell, das die Vielzahl von Leitungsbauteilen unterbringt; wobei das Gestell eine dazugehörende Rückwand hat; und wobei ein Bus in der Rückwand des Gestells angeordnet ist; wobei die Vielzahl von Leitungsbauteilen miteinander durch die Rückwand über den Bus verbunden ist; und wobei jedes Leitungsbauteil einen Adressenmechanismus enthält und jedes Leitungsbauteil seinen eigenen Adressenzähler hat; und wobei das Verfahren folgendes aufweist:
Bereitstellen einer digitalen Kommunikation zwischen den Vorrichtungen über die Leitungsbauteile und über den Bus in der Rückwand des Gestells; wobei das Verfahren weiterhin die Verwendung eines dezentralisierten Konzepts aufweist,
**wobei das Verfahren dadurch gekennzeichnet ist, dass**
die digitale Kommunikation zwischen den Vorrichtungen unter Verwendung eines skalierbaren und synchronen Busses bidirektional durchgeführt wird;
ein Master-Taktsignals auf einem Takt-Bauteil erzeugt wird;
lokal auf jedem Leitungsbauteil Lese- und Schreib-Taktsignale in Reaktion auf das Master-Taktsignal erzeugt werden; und
bestimmt wird, wie und wann jedes Leitungsbauteil Verkehrsdaten unter Verwendung der Lese- und Schreib-Taktsignale und des internen Adressierungssystems sendet und empfängt, um ein synchronisiertes Umschalten der digitalen Kommunikation zwischen den Vorrichtungen zu erreichen.

2. Verfahren nach Anspruch 1,
**gekennzeichnet durch** Anbringen von Schnittstellenschaltungen für die Rückwand auf den jeweiligen Leitungsbauteilen des Gestells.

3. Verfahren nach Anspruch 1 oder 2,
**dadurch gekennzeichnet, dass** das dezentralisierte Konzept durch Einführen eine Schnittstelle implementiert wird, die einen 8-Bit-Parallel-Datenbus und einen 125-µs-Framebildungspuls aufweist.

4. Verfahren nach einem der vorangehenden Ansprüche,
**gekennzeichnet durch** Verwenden von vier Typen von Funktionseinheiten: Leitungsbauteilen, einem CPU-Bauteil, einem Takt-Bauteil und 2-Mbit/s-Übertragungsbauteilen mit einer beliebigen Anzahl von Kanälen, und zwar typischerweise acht Kanälen bei einem Schalter in der Praxis.

5. Verfahren nach einem der vorangehenden Ansprüche,
**gekennzeichnet durch** Verwenden eines duplizierten Busses, wobei ein Bus ein aktiver Bus ist und der andere ein Standby-Bus ist, wobei ein Schreiben und ein Lesen zu beiden Bussen durchgeführt wird.

6. Anordnung für eine digitale Kommunikation zwischen Vorrichtungen; wobei die Anordnung auf einem dezentralisierten Konzept basiert; wobei die Anordnung folgendes aufweist:
eine Vielzahl von Leitungsbauteilen; wobei die Vorrichtungen auf den Leitungsbauteilen angeordnet sind;
ein Gestell, das die Vielzahl von Leitungsbauteilen unterbringt; wobei das Gestell eine dazugehörende Rückwand hat; und einen Bus, der in der Rückwand des Gestells angeordnet ist;
wobei die Vielzahl von Leitungsbauteilen durch die Rückwand über den Bus miteinander verbunden ist; **dadurch gekennzeichnet, dass**
der Bus ein skalierbarer und synchroner Bus ist; wobei der Bus ein bidirektionaler Bus ist; und dass
jedes Leitungsbauteil einen Adressenmechanismus enthält und jedes Leitungsbauteil seinen eigenen Adressenzähler hat; und dass
ein Takt-Bauteil angeordnet ist, um ein Master-Taktsignal zu erzeugen, und dass
jedes Leitungsbauteil implementiert ist, um Lese- und Schreib-Taktsignale in Reaktion auf das Master-Taktsignal lokal zu erzeugen, um ein synchronisiertes Umschalten einer digitalen Kommunikation zwischen den Vorrichtungen zu erreichen.

7. Anordnung nach Anspruch 6,
**dadurch gekennzeichnet, dass** die Rückwand Schnittstellenschaltungen auf den jeweiligen Leitungsbauteilen des Gestells aufweist.

8. Anordnung nach Anspruch 6 oder 7,
**dadurch gekennzeichnet, dass** eine Schnittstelle einen 8-Bit-Parallel-Datenbus und einen 1-Bit-Adressenbus aufweist.

9. Anordnung nach einem der Ansprüche 6 - 8,
**dadurch gekennzeichnet, dass** die Rückwandstruktur aus vier Typen von Funktionseinheiten zusammengesetzt ist: Leitungsbauteilen, einem CPU-Bauteil, einem Takt-Bauteil und 2-Mbit/s-Übertragungsbauteilen mit einer beliebigen Anzahl von Kanälen, und zwar typischerweise acht Kanälen bei einem Schalter in der Praxis.

10. Anordnung nach einem der Ansprüche 6 - 9,
**dadurch gekennzeichnet, dass** die Anordnung einen duplizierten Bus aufweist, wobei ein Bus aktiv ist und der andere im Standby-Betrieb ist, wobei beide Busse dazu geeignet sind, dass zu ihnen geschrieben wird.

## Revendications

1. Procédé de communication numérique entre des dispositifs dans un système comprenant une pluralité de cartes de lignes ; lesdits dispositifs étant disposés sur lesdites cartes de lignes ; et un bâti dans lequel sont logées ladite pluralité de cartes de lignes ; dans lequel ledit bâti a un fond de panier qui lui est associé ; et dans lequel un bus est disposé dans le fond de panier dudit bâti ; ladite pluralité de cartes de lignes étant connectées les unes aux autres par l'intermédiaire dudit fond de panier via ledit bus ; et dans lequel chaque carte de lignes comporte un mécanisme d'adressage et chaque carte de lignes a son propre compteur d'adresse ; et dans lequel ledit procédé comprend :
l'établissement d'une communication numérique entre lesdits dispositifs via lesdites cartes de lignes et via ledit bus dans le fond de panier dudit bâti ; ledit procédé comprenant en outre l'utilisation d'un concept décentralisé,
le procédé étant **caractérisé en ce que** :
ladite communication numérique entre lesdits dispositifs est effectuée de façon bidirectionnelle en utilisant un bus extensible et synchrone ;
on génère un signal d'horloge maîtresse sur une carte d'horloge ;
on génère, localement sur chaque carte de lignes, des signaux d'horloge de lecture et d'écriture en réponse audit signal d'horloge maîtresse ; et
on détermine comment et quand chaque carte de lignes envoie et reçoit des données de trafic en utilisant les signaux d'horloge de lecture et d'écriture et le système d'adressage interne afin d'assurer une commutation synchronisée de ladite communication numérique entre lesdits dispositifs.

2. Procédé selon la revendication 1, **caractérisé par** le montage de circuits d'interface pour ledit fond de panier sur des cartes de lignes respectives dudit bâti.

3. Procédé selon la revendication 1 ou 2, **caractérisé en ce que** le concept décentralisé est mis en oeuvre par introduction d'une interface comprenant un bus de données parallèle à 8 bits et une impulsion d'encadrement de 125 µs.

4. Procédé selon l'une quelconque des revendications précédentes, **caractérisé en ce qu'**on utilise quatre types d'unités fonctionnelles : des cartes de lignes, une carte CPU (unité centrale), une carte d'horloge et des cartes de transmission à 2 Mbit/s ayant un nombre quelconque de canaux, typiquement 8 canaux dans un commutateur utilisé dans la pratique.

5. Procédé selon l'une quelconque des revendications précédentes, **caractérisé en ce qu'**on utilise un bus dédoublé, l'un des bus étant un bus actif et l'autre étant un bus de réserve, l'écriture et la lecture étant effectuées sur les deux bus.

6. Système de communication numérique entre dispositifs ; ledit système étant fondé sur un concept décentralisé ; le système comprenant :
une pluralité de cartes de lignes ; lesdits dispositifs étant disposés sur lesdites cartes de lignes ;
un bâti dans lequel sont logées ladite pluralité de cartes de lignes ; dans lequel ledit bâti a un fond de panier qui lui est associé ; et
un bus disposé dans le fond de panier dudit bâti ;
ladite pluralité de cartes de lignes étant connectées les unes aux autres par l'intermédiaire dudit fond de panier via ledit bus ; **caractérisé en ce que** :
ledit bus est un bus extensible et synchrone ; ledit bus étant un bus bidirectionnel ; et **en ce que** :
chaque carte de lignes comporte un mécanisme d'adressage, chaque carte de lignes ayant son propre compteur d'adresse ; et **en ce que** :
une carte d'horloge est conçue pour générer un signal d'horloge maîtresse ; et **en ce que** :
chaque carte de lignes est mise en oeuvre pour lire et écrire localement des signaux d'horloge en réponse audit signal d'horloge maîtresse afin d'assurer une commutation synchronisée de la communication numérique entre lesdits dispositifs.

7. Système selon la revendication 6, **caractérisé en ce que** ledit fond de panier comprend des circuits d'interface sur les cartes de lignes respectives dudit bâti.

8. Système selon la revendication 6 ou 7, **caractérisé en ce qu'**une interface comprend un bus de données parallèle à 8 bits et un bus d'adresses à 1 bit.

9. Système selon l'une quelconque des revendications 6-8, **caractérisé en ce que** la structure de fond de panier est composée de quatre types d'unités fonctionnelles : des cartes de lignes, une carte CPU, une carte d'horloge et des cartes de transmission à 2 Mbits/s ayant un nombre quelconque de canaux, typiquement 8 canaux dans un commutateur utilisé dans la pratique.

10. Système selon l'une quelconque des revendications 6-9, **caractérisé en ce que** le système comprend un bus dédoublé, un bus étant actif et l'autre bus étant en réserve, les deux bus étant aptes à faire l'objet d'une écriture.
